# EUROPÄISCHE PATENTSCHRIFT

(11) **EP 2 440 755 B1**
(45) Veröffentlichungstag und Bekanntmachung des Hinweises auf die Patenterteilung: **04.03.2015**
(21) Anmeldenummer: 10723094.8
(22) Anmeldetag: 28.05.2010
(51) Int. Cl.: F01M 13/04, B01D 45/08

(54) **ÖLNEBELABSCHEIDER**
OIL MIST SEPARATOR
SÉPARATEUR DE BROUILLARD D'HUILE

(30) Priorität: 12.06.2009 DE 102009024701
(43) Veröffentlichungstag der Anmeldung: 18.04.2012
(73) Patentinhaber: Mahle International GmbH, 70376 Stuttgart (DE)
(72) Erfinder: RUPPEL, Stefan, 69126 Heidelberg-Emmertsgrund (DE)
(74) Vertreter: BRP Renaud & Partner mbB Rechtsanwälte Patentanwälte Steuerberater
(86) Internationale Anmeldenummer: PCT/EP2010/057463
(87) Internationale Veröffentlichungsnummer: WO 2010/142544

(56) Entgegenhaltungen:
- WO-A1-2007/028351
- DE-A1- 1 544 126
- DE-A1- 3 826 684
- DE-A1-102005 043 198
- FR-A1- 2 913 054

## Beschreibung

Die vorliegende Erfindung betrifft einen als Impaktor ausgebildeten Ölnebelabscheider.

Im Betrieb von Brennkraftmaschinen, die bspw. in Kraftfahrzeugen angeordnet sein können, gelangt über eine Leckage zwischen Kolben und Zylindern ein so genanntes Blow-by-Gas in ein Kurbelgehäuse der jeweiligen Brennkraftmaschine. Um dabei einen unzulässigen Überdruck im Kurbelgehäuse bzw. um eine unerwünschte Emission von Blow-by-Gasen in die Umgebung zu vermeiden, kommen so genannte Kurbelgehäuseentlüftungseinrichtungen zum Einsatz. Üblicherweise verbindet eine derartige Entlüftungseinrichtung mit Hilfe einer Entlüftungsleitung das Kurbelgehäuse mit einem Ansaugtrakt der Brennkraftmaschine, in welchem, insbesondere stromab einer Drosselklappe, ein relativer Unterdruck herrscht, der es ermöglicht, das sich im Kurbelgehäuse ansammelnde Blow-by-Gas aus diesem abzusaugen. Im Kurbelgehäuse entsteht während des Betriebs der Brennkraftmaschine ferner ein Ölnebel, welcher aerosol gelöst das Blow-by-Gas befrachtet. Um hierbei den Ölverbrauch der Brennkraftmaschine sowie eine Schadstoffemission zu reduzieren, wird üblicherweise ein Ölnebelabscheider eingesetzt, der die aerosol im Blow-by-Gas gelösten Ölpartikel abscheidet und einem entsprechenden Ölreservoir zuführt. Eine zunehmende Verschärfung von Schadstoffemissionsbestimmungen erfordert eine stetige Verbesserung der Reinigungswirkung derartiger Ölnebelabscheider.

Aus der EP 0 860 589 B1 ist bspw. ein Ölnebelabscheider für eine Kurbelgehäuseentlüftungseinrichtung bekannt, welcher eine erste und eine zweite Abscheidereinheit sowie ein Bypassventil aufweist.
Die FR 2 913 054 A1 offenbart einen Ölabscheider mit einer Prallwand, die mit einem Abscheidematerial belegt ist.

Die vorliegende Erfindung beschäftigt sich mit dem Problem, für einen Ölnebelabscheider, eine verbesserte Ausführungsform anzugeben, die sich insbesondere durch einen hohen Abscheidegrad auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem als Impaktor ausgebildeten Ölnebelabscheider mit einer Düseneinrichtung mit zumindest einer Düse und einer dieser gegenüberliegenden Prallwand im Bereich dieser wenigstens einen Düse einen Abstand zwischen derselben und der Prallwand zu verringern. Die Prallwand ist dabei üblicherweise mit einem Abscheidematerial, insbesondere mit einem Vließ oder einem Gestrick, zur Erhöhung der Abscheidewirkung belegt. Selbstverständlich besitzt dabei die Düseneinrichtung üblicherweise eine Vielzahl von nebeneinander liegenden Düsen, welche vorzugsweise alle in ihrem Mündungsbereich einen geringeren Abstand zum Abscheidematerial aufweisen als zwischen den einzelnen Düsen. Hierbei ist es generell egal, wodurch die Abstandsverringerung erzielt wird, so dass bspw. vulkanartig vorstehende Düsen und/oder Abscheidematerial vorgesehen sein kann, welches im Bereich der gegenüberliegenden Düse in Richtung derselben vorsteht. Wichtig hierbei ist lediglich, dass durch den im Bereich der Düsen verringerten Abstand zwischen einer Mündung der jeweiligen Düse und dem gegenüberliegenden Abscheidematerial eine sehr starke Strömungsumlenkung der Blow-by-Gase im Bereich der Düsen erzwungen wird, wodurch insgesamt ein deutlich verbesserter Abscheidegrad erzielt werden kann. Durch die besondere Art der Ausführung der Düsen / Abscheidematerial / Impaktorwand ist die Strömungsgeschwindigkeit nur im Bereich hinter der Düse sehr hoch, was eine gute Abscheidung bewirkt. Im weiteren Verlauf wird die Strömung wieder verlangsamt. Dies hat einen positiven Einfluss auf den Differenzdruck und die Sicherheit des Bauteils. Durch die üblicherweise vorhandene Vielzahl an Düsen wird das aus den einzelnen Düsenmündungen ausgestoßene Blow-by-Gas gezwungen entweder durch das Abscheidematerial selbst hindurch zu strömen oder aber über einen Zwischenraum zwischen der Düseneinrichtung und dem Abscheidematerial abzuströmen, wobei dieser Zwischenraum durch die verringerten Abstände zwischen dem Abscheidematerial und den jeweils gegenüberliegenden Düsen zerklüftet ist, wodurch auch auf diesem Wege abströmendes Blow-by-Gas eine geringere Strömungsgeschwindigkeit aufweist. Wie bereits erwähnt kann dabei der im Bereich der Düsen verringerte Abstand zwischen den Düsen und dem gegenüberliegenden Abscheidematerial durch in Richtung des Abscheidematerials vorstehende Düsen und/oder durch in Richtung der Düsen vorstehendes Abscheidematerial erreicht werden. Insbesondere lässt sich mit einem derartigen erfindungsgemäßen Ölnebelabscheider ein vergleichsweise hoher Wirkungsgrad bei gleichzeitig hoher Sicherheit und kleinem Differenzdruck erzielen.

Bei einer vorteilhaften Weiterbildung der erfindungsgemäßen Lösung, ist die Prallwand durch ein Ventilglied eines Bypassventils gebildet. Die Prallwand verschließt somit üblicherweise das Bypassventil, welches zugleich die Düse darstellt, so dass hier eine Ölnebelabscheidung ausschließlich dann erfolgen kann, sofern das Bypassventil öffnet. Ist dies der Fall, wirkt dieses als Düse und der sich öffnende Ventilteller, welcher bspw. mit dem Abscheidematerial belegt ist, als Prallwand. In einem derartig ausgestalteten Bypassventil kann selbst dieses als Ölnebelabscheider genutzt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: eine Schnittdarstellung durch einen Ölnebelabscheider (nicht Teil der Erfindung gemäß den Ansprüchen),
- Fig. 2: eine Darstellung wie in Fig. 1, jedoch bei einem anderen Ölnebelabscheider (nicht Teil der Erfindung gemäß den Ansprüchen),
- Fig. 3: eine Darstellung wie in Fig. 1, jedoch bei einer erfindungsgemäßen Ausführungsform,
- Fig. 4: einen Ölnebelabscheider, bei welchem eine Prallwand durch ein Ventilglied eines Bypassventils gebildet ist.

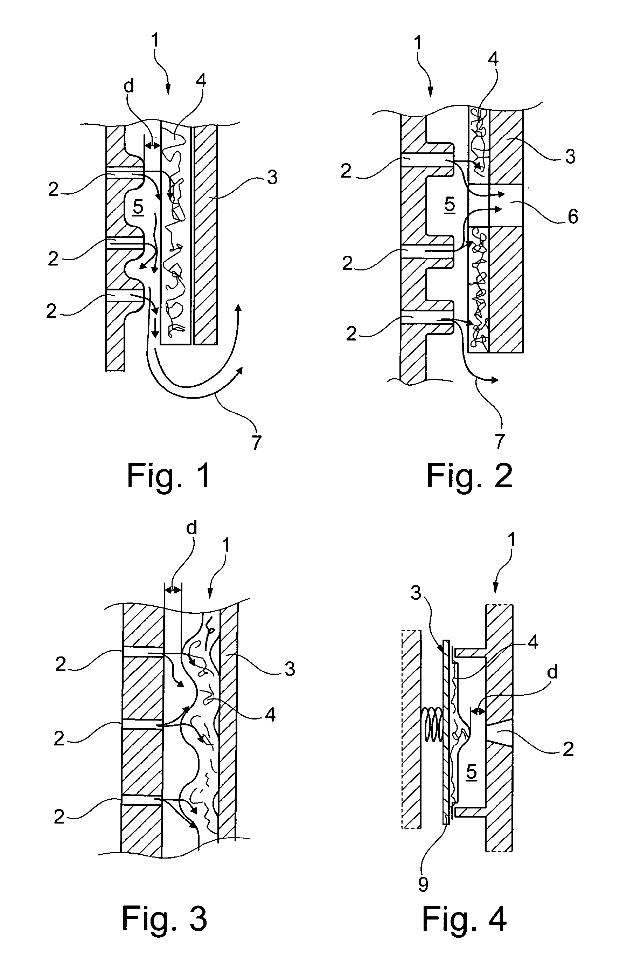

Entsprechend den Fig. 1 bis 3, weist ein Ölnebelabscheider 1 für insbesondere eine Kurbelgehäuseentlüftung eine Düseneinrichtung mit zumindest einer Düse 2, gemäß den Fig. 1 bis 3 mit jeweils insgesamt drei Düsen 2 auf. Den Düsen 2 gegenüberliegend ist eine Prallwand 3 angeordnet, welche mit einem Abscheidematierial 4, insbesondere mit einem Vließ, einem Gestrick oder einem Gewirke, belegt ist. Erfindungsgemäß ist nun im Bereich der Düsen 2 ein Abstand d zwischen den Düsen 2, dass heißt zwischen einer Mündung derselben, und dem Abscheidematerial 4 kleiner als in einem die Düsen 2 umgebenden Bereich 5. Hierdurch soll erzwungen werden, dass die Strömungsgeschwindigkeit in dem als Impaktor ausgebildeten Ölnebelabscheider 1 insgesamt abnimmt und dadurch die Abscheidewirkung deutlich verbessert wird.

Die Prallwand 3 kann dabei wie in Fig. 1 gezeigt, undurchlässig, oder aber wie in Fig. 2 gezeigt mit Durchgangsöffnungen 6 versehen sein, so dass ein aus den Düsen 2 austretender Blow-by-Gasstrom 7 die Prallwand 3 umströmen oder an bestimmten Stellen durch diese hindurch treten kann.

Betrachtet man die Fig. 1 und 2, so wird der verringerte Abstand d im Bereich der Düsen 2 zum Abscheidematerial 4 durch in Richtung der Prallwand 3, dass heißt in Richtung des Abscheidematerials 4 vorstehende Düsen 2 erzeugt, wogegen der verringerte Abstand d im Bereich der Düsen 2 gemäß der Fig. 3 durch Abscheidematerial 4 erzeugt wird, welches im Bereich der gegenüberliegenden Düsen 2 in Richtung derselben vorsteht. Selbstverständlich ist dabei auch eine Mischform aus beiden Ausführungsformen denkbar.

Betrachtet man die Fig. 4, so ist hier der Ölnebelabscheider 1 in eine Ventileinrichtung integriert, wobei die Prallwand 3 durch ein Ventilglied, insbesondere einen Ventilteller 8, gebildet ist. Der Ventilteller 8 ist dabei ebenso wie die gemäß den Fig. 1 bis 3 gezeigten Prallwände 3 mit Abscheidematerial 4 belegt, welches im Bereich der Düse 2 in Richtung derselben vorsteht und dadurch den Abstand d der Düsenmündung zum Abscheidematerial 4 in diesem Bereich im Vergleich zu einem umliegenden Bereich 5 verringert. In diesem Fall ist die Ventileinrichtung als Tellerventil ausgebildet, wobei selbstverständlich auch weitere Ausführungsformen denkbar sind.

Durch die Vielzahl von nebeneinander angeordneten Düsen 2, stellen diese im Zusammenwirken mit der gegenüberliegenden Prallwand 3 Strömungshindernisse dar, welche einen Blow-by-Gasstrom 7 zusätzlich verlangsamen und dadurch die Abscheidewirkung erhöhen. Der Blow-by-Gasstrom 7 kann dabei sowohl durch das Abscheidematerial 4 hindurch als auch entlang demselben strömen, wobei die Aerosol im Blow-by-Gasstrom 7 gelösten Ölnebeltröpfchen abgeschieden, gesammelt und üblicherweise einem darunter liegenden Ölreservoir wieder zugeführt werden. Generell werden derartige Ölnebelabscheider 1 im Bereich einer Kurbelgehäuseentlüftung eingesetzt, um einen Ölverbrauch einer Brennkraftmaschine zu reduzieren.

## Patentansprüche

1. Brennkraftmaschine mit einem Ölnebelabscheider (1) für eine Kurbelgehäuseentlüftung, welcher als Impaktor ausgebildet ist,
- mit einer Düseneinrichtung mit zumindest einer Düse (2),
- mit einer der wenigstens einen Düse (2) gegenüberliegenden Prallwand (3), die mit einem Abscheidematerial (4) belegt ist,
- wobei im Bereich der wenigstens einen Düse (2) ein Abstand (d) zwischen derselben und dem Abscheidematerial (4) im Vergleich zu umliegenden Bereich (5) verringert ist.
**dadurch gekennzeichnet,**
**dass** das Abscheidematerial (4) im Bereich der gegenüberliegenden Düse (2) in Richtung derselben vorsteht und dadurch den Abstand (d) einer Düsenmündung zum Abscheidematerial (4) in diesem Bereich im Vergleich zu einem umliegenden Bereich (5) verringert.

2. Brennkraftmaschine nach Anspruch 1,
**dadurch gekennzeichnet,**
**dass** das Abscheidematerial (4) als Vlies, als Gestrick, als Gewebe oder als Gewirke ausgebildet ist.

3. Brennkraftmaschine nach Anspruch 1 oder 2,
**dadurch gekennzeichnet,**
**dass** die wenigstens eine Düse (2) aus der Düseneinrichtung in Richtung der Prallwand (3) vorsteht.

4. Brennkraftmaschine nach einem der Ansprüche 1 bis 3,
**dadurch gekennzeichnet,**
**dass** die Prallwand (3) durch ein Ventilglied eines Bypassventils gebildet ist.

5. Brennkraftmaschine nach Anspruch 4,
**dadurch gekennzeichnet,**
**dass** das Bypassventil als Tellerventil ausgebildet ist.

6. Brennkraftmaschine nach einem der Ansprüche 1 bis 5,
**dadurch gekennzeichnet,**
**dass** die Düseneinrichtung eine Vielzahl an Düsen (2) aufweist, welche im Zusammenwirken mit der Prallwand (3) Strömungshindernisse darstellen.

## Claims

1. An internal combustion engine comprising an oil mist separator (1) for a crankcase ventilation system, the oil mist separator being designed as an impactor,
- with a nozzle device having at least one nozzle (2),
- with an impact wall (3) located opposite to the at least one nozzle (2) and coated with a separation material (4),
- wherein in the region of the at least one nozzle (2), a distance (d) between said nozzle and the separation material (4) is reduced compared to the surrounding region (5),
**characterized in**
**that** the separation material (4) in the region of the opposing nozzle (2) projects towards the same and thereby reduces the distance (d) of a nozzle outlet to the separation material (4) in this region compared to a surrounding region (5).

2. The internal combustion engine according to claim 1,
**characterized in**
**that** the separation material (4) is designed as a fleece, a knitted material, a fabric, or a meshed material.

3. The internal combustion engine according to claim 1 or claim 2,
**characterized in**
**that** the at least one nozzle (2) projects from the nozzle device towards the impact wall (3).

4. The internal combustion engine according to any one of the claims 1 to 3,
**characterized in**
**that** the impact wall (3) is formed by a valve member of a bypass valve.

5. The oil mist separator according to claim 4,
**characterized in**
**that** the bypass valve is designed as a poppet valve.

6. The oil mist separator according to any one of the claims 1 to 5,
**characterized in**
**that** the nozzle device has a plurality of nozzles (2) which, by interacting with the impact wall (3), represent flow barriers.

## Revendications

1. Moteur à combustion interne comportant un séparateur de nuage d'huile (1) pour une vidange de carter de vilebrequin, qui est conçu comme un impacteur,
- comportant un dispositif de buse avec au moins une buse (2),
- comportant une paroi d'impact (3) opposés à au moins une buse (2), qui est revêtue d'un matériau séparateur (4),
- dans lequel au niveau d'au moins une buse (2) un espacement (d) entre celle-ci et le matériau séparateur (4) est diminué comparé à la zone environnante (5),
**caractérisé en ce que**
le matériau séparateur (4) au niveau de la buse opposée (2) dépasse en saillie dans la direction de celle-ci et **en ce que** l'espacement (d) d'une ouverture de buses par rapport au matériau séparateur (4) diminue dans cette zone comparé à une zone environnante (5).

2. Moteur à combustion interne selon la revendication 1, **caractérisé en ce que** le matériau séparateur (4) est conçu comme un non-tissé, un tricot, un tissu ou une maille.

3. Moteur à combustion interne selon la revendication 1 ou 2, **caractérisé en ce que** au moins une buse (2) dépasse à partir d'un dispositif de buse dans la direction de la paroi d'impact (3).

4. Moteur à combustion interne selon une des revendications 1 à 3, **caractérisé en ce que** la paroi d'impact (3) est formée par un organe de soupape d'une soupe de dérivation.

5. Moteur à combustion interne selon la revendication 4, **caractérisé en ce que** la soupape de dérivation est conçue comme une soupape à disque.

6. Moteur à combustion interne selon une des revendications 1 à 5, **caractérisé en ce que** le dispositif de buse présente une pluralité de buses (2), qui représentent des obstacles à l'écoulement en coopération avec la paroi d'impact (3).
